# DEMANDE DE BREVET EUROPEEN

(11) **EP 0 697 264 A1**
(43) Date de publication de la demande: **21.02.1996**
(21) Numéro de dépôt: 95500107.8
(22) Date de dépôt: 20.07.1995
(51) Int. Cl.: B23C 5/26

(54) **Fixe-outils**

(30) Priorité: 21.07.1994 ES 9401656
(71) Demandeur: Prieto Gallego, Feliciano, E-01008 Vitoria (Alava) (ES)
(72) Inventeur: Prieto Gallego, Feliciano, E-01008 Vitoria (Alava) (ES)

(57) **Abrégé**

FIXE-OUTILS.- Il est monté sur un noyau central porte-outils et comprend :

Un noyau central porte-outil (A), au centre duquel vient se fixer la partie mobile du fixe-outil.

Une partie (B) qui tourne grâce à deux roulements, montée sur la zone intermédiaire du noyau central.

Une pièce "bras" (C), fixée sur la partie mobile et pour laquelle existent deux options :
a) descente en rotation autour du manche,
b) descente parallèle au manche. Dans ce cas, deux pièces supplémentaires sont en rotation autour du manche.

L'option a) rend nécessaire l'emploi d'un outil spécial, à manche extra-long, muni de bagues de réglage pour limiter le frottement au minimum.

Le système vise la rigidité et la stabilité des outils extra-longs.

## Description

### OBJECTIF DE L'INVENTION

L'invention vise à promouvoir, dans le domaine du fraisage par machines-outils, l'utilisation de fraises très longues par rapport à leur diamètre.

### DESCRIPTION DE L'INVENTION

Le fixe-outils est monté sur un noyau porte-outils et comprend les pièces suivantes :
a) Le noyau central (1) avec une partie supérieure conique permettant la fixation à l'appareil, une partie intermédiaire sur laquelle est montée l'élément rotatif, et une partie inférieure où l'outil vient se fixer.
   La fixation de l'outil peut se faire au moyen du système classique de pince conique et écrou, comme sur la figure (4), ou bien comme sur les figures (1) et (3), au moyen d'une bague (6) pourvu d'une partie plane et conique où le manche de la fraise (15) est retenu par des vis "prisonnières" (7) pour qu'ensuite, la bague soit fixée par des vis (14) sur la partie inférieure du noyau (1). En général, l'outil peut être fixés grâce aux deux systèmes décrits ci-dessus ou grâce à n'importe quel autre. Toutefois, plus la hauteur entre le point de fixation de la fraise et le point de fixation ou de naissance du "bras" sera courte, et plus le dispositif sera rigide et fiable.
b) Un élément rotatif au moyen de deux roulements (3), monté sur la partie intermédiaire du noyau (1) comme illustré sur la figure (1). C'est sur le méplat de la pièce externe de cet élément rotatif qu'est ajustée et fixée soit la pièce (9) représentée sur la figure (1), soit la pièce (18) dessinée sur la figure (4). Cet élément rotatif comprend aussi une pièce filetée (21) dont la fonction consiste à bloquer ou à laisser tourner le système selon les besoins.
c) Une pièce "bras" qui s'enchâsse sur la partie rotative et qui offre deux options :
   1) descente en rotation autour du manche,
   2) descente parallèle au manche et sans le contourner.

Dans le premier cas, voir figure (1), le bras tendra à avoir une forme ovoïde à l'endroit qui accompagne l'outil, avec une rainure à l'extrémité inférieure, une vis (11) de tension afin d'éliminer tout jeu et une poulie (12) facilitant le glissement et la position correcte du profilé en cours d'usinage. L'utilisation du bras rend souhaitable, voire nécessaire, l'emploi d'une fraise spéciale, semblable à celle représentée sur la figure (2), à manche extra-long et munies de plusieurs bagues (D) en bronze, en laiton ou d'un autre matériau résistant à l'usure et qui ne se bloque pas lors de la rotation à l'intérieur du bras.

Dans le second cas, c'est-à-dire si le bras descend en parallèle à l'outil, comme illustré sur la figure (4), il tendra à adopter une forme ovoïde excepté dans la zone proche du manche de la fraise, qui sera plane ou concave. Sur le bras sont montées deux pièces (19 et 20) qui descendent en rotation autour du manche de l'outil. La pièce inférieure (20) porte une rainure et deux vis de tension (17) pour éviter le jeu. Comme illustré sur la figure (5), si les pièces sont en bronze ou d'un autre matériau qui ne se bloque pas dans le manche de l'outil, elles présenteront un surbaissement. C'est-à-dire que la zone intermédiaire de ces pièces sera d'un diamètre supérieur de manière à ce que le frottement soit atténué. Si les pièces sont en acier et construites à l'aide de la fraise spéciale munie de bagues dans le manche décrite plus haut, le surbaissement n'est pas nécessaire. Le fait que les deux pièces occupent une partie du bras dans la zone où celui-ci descend parallèle au manche de la fraise a pour objectif de guider le manche de l'outil en deux points, et d'éviter que le copeau dégagé par l'opération ne coince le bras.

### BREVE DESCRIPTION DES DESSINS

La figure (1) est une vue en perspective du fixe-outils monté sur un noyau porte-outils et du bras descendant en rotation autour du fixe-outils.

La figure (2) représente une section du bras, avec le manche de la fraise spéciale à utiliser avec le fixe-outils.

La figure (3) est une vue en perspective d'un des système de fixation de l'outil.

La figure (4) est une vue en perspective d'un détail du fixe-outils, avec le bras portant les deux pièces rotatives autour du manche de l'outil.

La figure (5) est une section du bras avec les deux pièces en contact du manche de l'outil.

### DESCRIPTION D'UNE REALISATION PREFERENTIELLE

Sur la partie intermédiaire du noyau (1) est monté le bloc rotatif, composé des roulements (3), de la pièce (5) et de la pièce extérieure (2) fixée au centre de la pièce (4), et des vis (8). Le cran de la partie plane de la pièce rotative (2) accueille le bras, fixé par les vis (10). Sur la partie inférieure du bras, on place la vis (11) destinée à éviter le jeu, et la poulie (12) au moyen de la pièce filetée.

Si le bras est le numéro (18) représenté sur les figures (4 et 5), la fixation sur la partie rotative doit être effectuée de la façon décrite plus haut, et les deux pièces (19 et 20) seront fixées au bras à l'endroit du cran par les vis (16). Les vis (17) serrent la pièce (20) sur le manche de l'outil et, sur la partie inférieure, on met la poulie en place de la manière décrite plus haut.

## Revendications

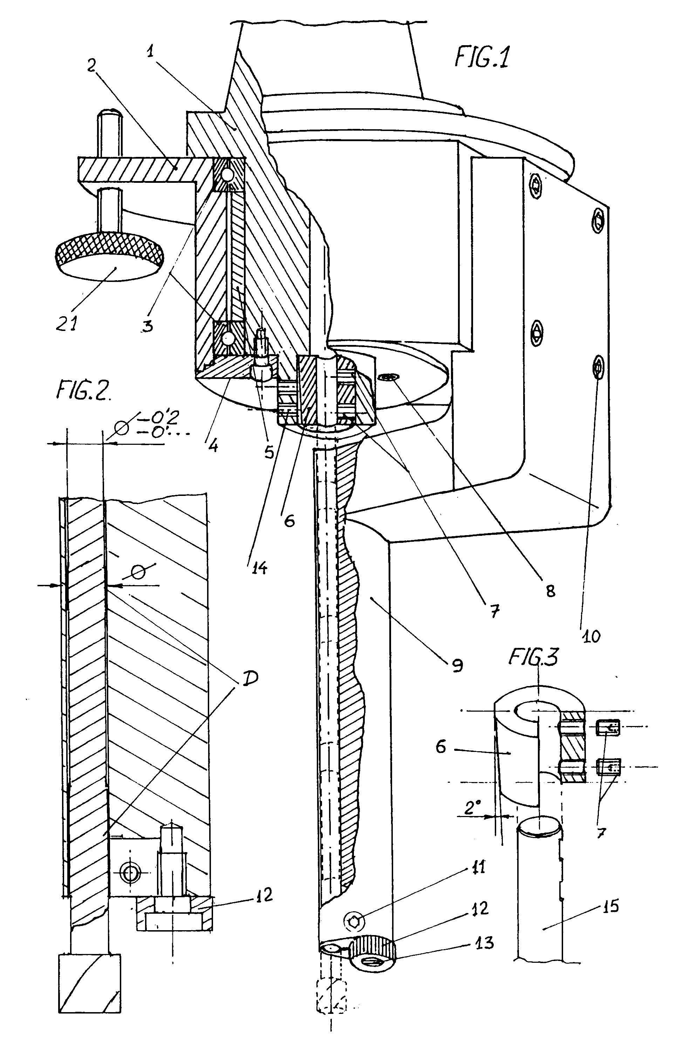

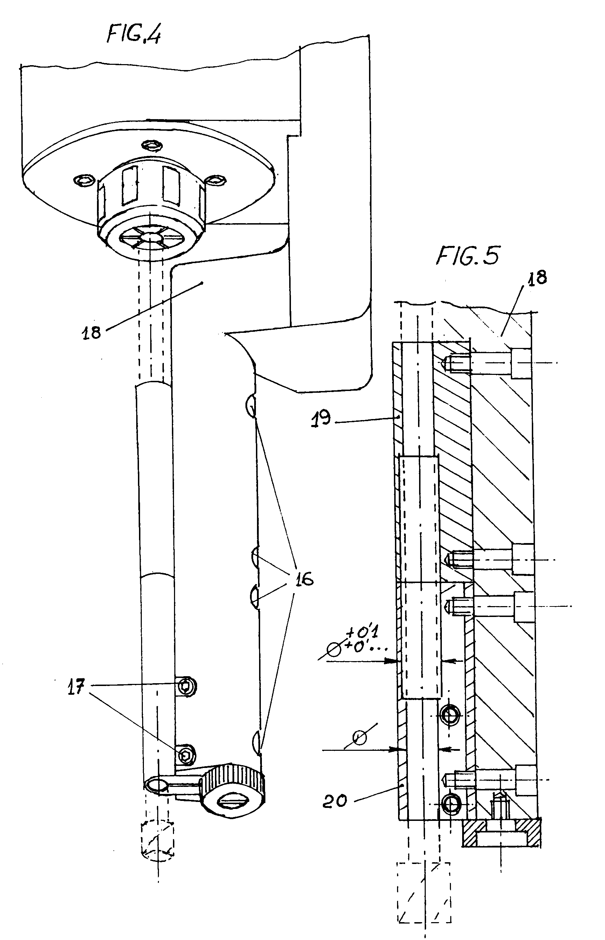

PREMIER FIXE-OUTILS.- Monté sur un noyau porte-outils et se distinguant par:
La partie rotative montée sur la zone intermédiaire du noyau porte-outils.
Le "bras" fixé sur la partie rotative et qui admet deux options :
a) descente en rotation autour du manche de l'outil rendant nécessaire l'utilisation d'un outil spécial dont le manche, extra-long, est muni de plusieurs bagues (Fig.2).
b) descente parallèle au manche de l'outil, avec deux pièces (19 et 20) en rotation autour du manche de l'outil. La pièce inférieure (20) comprend deux vis qui la serrent sur le manche.
En outre, pour les options a) et b), la partie inférieure du bras est munie d'une poulie.

DEUXIEME FIXE-OUTILS.- Similaire au premier. Lors de la descente le bras est en rotation autour du manche de l'outil. Il tend à adopter une forme ovoïde et porte une petite rainure et une vis, ainsi qu'une poulie à l'extrémité inférieure.

TROISIEME FIXE-OUTILS.- Similaire au premier. Lors de la descente, le bras supporte deux pièces en rotation autour du manche de l'outil, sur les 3/4 environ de la longueur de celui-ci. La pièce inférieure porte une rainure et deux vis de serrage. La forme tend également à être ovoïde, excepté dans la zone proche du manche, et l'extrémité inférieure porte une poulie.

QUATRIEME FIXE-OUTILS.- Similaire aux 1^{º} et 2ème, le manche extra-long de la fraise est muni de plusieurs bagues.
